# DEMANDE DE BREVET EUROPEEN

(11) **EP 2 165 881 A1**
(43) Date de publication de la demande: **24.03.2010**
(21) Numéro de dépôt: 09170303.3
(22) Date de dépôt: 15.09.2009
(51) Int. Cl.: B60Q 1/14

(54) **Procédé d'ajustement de l'éclairage des projecteurs pour véhicules automobiles**

(30) Priorité: 23.09.2008 FR 0805238
(71) Demandeur: Valeo Vision, 93012 Bobigny Cedex (FR)
(72) Inventeur: Charpentier, Adrien, 70180, STUTTGART (DE)

(57) **Abrégé**

L'invention concerne un procédé d'ajustement de l'éclairage de projecteurs pour véhicule automobile. Elle se **caractérise en ce qu**'il comporte une étape de détection d'objets éclairants comportant les sous-étapes de :
- Déterminer une première région d'intérêt dans une image acquise par une caméra vidéo du véhicule;
- Extraire des objets dans ladite première région d'intérêt, un objet extrait correspondant à une pluralité de pixels successifs ayant une valeur supérieure à un premier niveau de gris ;
- Sélectionner les objets extraits qui ont une taille supérieure à une taille déterminée ;

et une étape de déterminer un mode d'éclairage des projecteurs du véhicule automobile en fonction :
- des objets sélectionnés, lesdits objets sélectionnés correspondant à des objets éclairants ; et
- de paramètres propres au véhicule.

Application : véhicule automobile

## Description

La présente invention concerne un procédé d'ajustement de l'éclairage de projecteurs pour véhicule automobile, et un dispositif d'ajustement permettant de mettre en oeuvre ledit procédé.

Elle trouve une application particulière dans le domaine des véhicules automobiles.

Dans le domaine des véhicules automobiles, un état de la technique antérieur connu de procédé d'ajustement de l'éclairage de projecteurs pour véhicule automobile utilise une détection fonction de la vitesse du véhicule. Selon la vitesse du véhicule, le procédé adapte les projecteurs du véhicule en conséquence, en position code (feux de croisement) ou route (plein phare). Ainsi, par exemple, en dessous de 50km/h, le procédé considère que le véhicule est dans un environnement éclairé, tandis qu'au dessus, il considère qu'il est dans un environnement non éclairé.

Un inconvénient de cet état de la technique antérieur est que dans certains cas, les projecteurs sont mal adaptés à la situation que rencontre le véhicule. En effet, par exemple, en pleine agglomération si la vitesse du véhicule est rapide, le procédé d'ajustement va positionner les projecteurs en position route, alors qu'ils devraient être en position code. Dans un autre exemple, en forêt, si le véhicule rencontre un dos d'âne, il va freiner, et le procédé d'ajustement va positionner les projecteurs en position code, alors qu'ils devraient être en position route.

La présente invention a pour but un procédé d'ajustement de l'éclairage de projecteurs de véhicule automobile, qui permet d'éviter les inconvénients cités ci-dessus, et notamment qui permet de positionner les projecteurs du véhicule de façon adéquate par rapport à l'environnement du véhicule.

Selon un premier objet de l'invention, ce but est atteint par un procédé d'ajustement de l'éclairage de projecteurs pour véhicule automobile, **caractérisé en ce qu**'il comporte :
- une étape de détection d'objets éclairants comportant les sous-étapes de :
   - Déterminer une première région d'intérêt dans une image acquise par une caméra vidéo du véhicule ;
   - Extraire des objets dans ladite première région d'intérêt, un objet extrait correspondant à une pluralité de pixels successifs ayant une valeur supérieure à un premier niveau de gris ;
   - Sélectionner les objets extraits qui ont une taille supérieure à une taille déterminée ;
- et une étape de détermination du mode d'éclairage des projecteurs du véhicule automobile en fonction :
   - des objets sélectionnés, lesdits objets sélectionnés correspondant à des objets éclairants ; et
   - de paramètres propres au véhicule.

Comme on va le voir en détail par la suite, grâce à l'extraction et la sélection de ces objets qui correspondent à des objets éclairants, tels que des lampadaires, l'ajustement du mode d'éclairage des projecteurs du véhicule ne se fait plus à l'aveugle en fonction de la vitesse uniquement du véhicule, mais prend en compte l'environnement du véhicule.

Selon des modes de réalisation non limitatifs, le procédé présente en outre les caractéristiques suivantes :
- La première région d'intérêt se situe au dessus de l'horizon dans l'image acquise. Cette région d'intérêt est suffisante pour détecter les lampadaires qui se situent toujours au dessus de l'horizon.
- Le procédé d'ajustement comporte en outre une étape supplémentaire de valider la sélection d'un objet en fonction de sa trajectoire déterminée dans une séquence d'images. Ce critère de trajectoire est un critère qui permet de fiabiliser la détection de l'éclairage de nuit tel que des lampadaires.
- La validation d'un objet sélectionné s'effectue en outre en fonction du nombre de fois où il apparaît dans une séquence d'images. Cela évite de retenir un objet éclairant qui ne serait pas un lampadaire, un lampadaire apparaissant en général plusieurs fois dans une séquence d'images au fur et à mesure que le véhicule roule.
- Une temporisation est déclenchée à la suite d'une validation.. Cela permet de prendre en compte la distance qui peut exister entre deux lampadaires.
- Lorsque l'état des projecteurs du véhicule est initialement en position code :
   - Si au moins un objet a été sélectionné ;
   - Ou si le véhicule comporte un angle au volant supérieur à un angle de référence ;
   - Ou si la vitesse du véhicule est inférieure à une première vitesse de référence et aucun des critères de vérité correspond à un état sûr de zone non éclairée ;
   - OU si la vitesse du véhicule est inférieure à une deuxième vitesse de référence ;
      - Alors le mode d'éclairage des projecteurs demeure en position code ;
      - Sinon, le mode d'éclairage des projecteurs est ajusté en position route.
- Lorsque l'état des projecteurs du véhicule est initialement en position route :
   - Si la vitesse du véhicule est supérieure à une première vitesse de référence ;
      - Si au moins un objet a été sélectionné ;
         - Alors le mode d'éclairage des projecteurs est ajusté en position code ;
   - Si la vitesse du véhicule est inférieure à la première vitesse de référence ;
      - Si au moins un objet a été sélectionné ;
         - Alors le mode d'éclairage des projecteurs est ajusté en position code ;
         - Sinon, le mode d'éclairage des projecteurs demeure en position route.

Le procédé d'ajustement comporte en outre une étape supplémentaire de déterminer des zones éclairées de nuit par les objets éclairants dans laquelle :
- On détermine une deuxième région d'intérêt dans une image acquise par une caméra vidéo du véhicule ; et
- On mesure un degré d'éclairement dans ladite deuxième région d'intérêt.

Ajouté à la détection des objets éclairants, cela permet de reconnaître plus sûrement si le véhicule se trouve dans un environnement éclairé ou non.
- La détermination des zones éclairées comporte en outre une étape supplémentaire de supprimer de la deuxième région d'intérêt une troisième région d'intérêt représentative d'une zone éclairée par un faisceau lumineux des projecteurs du véhicule. Cela évite de confondre la zone éclairée par le faisceau lumineux des projecteurs du véhicule avec une zone éclairée de nuit par des objets éclairants.
- La mesure du degré d'éclairement s'effectue selon un critère d'amplitude de luminosité dans la deuxième région d'intérêt, ladite amplitude se calculant en fonction de la valeur moyenne de la valeur des pixels de la deuxième région d'intérêt. Cela donne un moyenne de l'éclairement sur toute la deuxième région d'intérêt.
- La mesure du degré d'éclairement s'effectue selon un critère de niveau de détail des informations contenues dans la deuxième région d'intérêt, ledit niveau de détail étant calculé en fonction de l'entropie de la deuxième région d'intérêt. En effet, une zone éclairée comporte dans l'image plus de détails qu'une zone toute noire non éclairée.
- La mesure du degré d'éclairement s'effectue selon un critère de répartition de luminosité dans la deuxième région d'intérêt, ladite répartition se calculant en fonction d'un nombre de pixels dans la deuxième région d'intérêt dont la valeur est supérieure à un niveau de référence. On détermine ainsi la luminosité moyenne sur toute la deuxième région d'intérêt.
- A chaque critère est associé :
   - un premier seuil qui permet de déterminer si le véhicule se trouve dans une zone éclairée ou non ;
   - un deuxième seuil qui permet de déterminer si le véhicule se trouve de façon certaine dans une zone éclairée ; et
   - un troisième seuil qui permet de déterminer si le véhicule se trouve de façon certaine dans une zone non éclairée.
- A chaque seuil est associé respectivement un compteur qui permet de déterminer un nombre de fois où ledit seuil associé est atteint sur une séquence d'images.
- A chaque compteur est associé respectivement un critère de vérité qui est marqué vrai lorsque le compteur associé atteint un nombre de temporisation donné. On détermine ainsi si le véhicule se trouve probablement dans une zone éclairée ou non, ou de façon certaine dans une zone éclairée ou non.
- La détermination du mode d'éclairage des projecteurs s'effectue en outre selon :
   - les objets validés ; et
   - le degré d'éclairement.

La détermination est ainsi plus fiable que dans le cas d'une détermination uniquement avec une sélection d'objets et des paramètres du véhicule.

Lorsque l'état des projecteurs du véhicule est initialement en position code :
- Si au moins un objet a été validé ;
- Ou si au moins deux critères de vérité correspondent à un état probable de zone éclairée ou à un état sûr de zone éclairée ;
- Ou si le véhicule comporte un angle au volant supérieur à un angle de référence ;
- Ou si la vitesse du véhicule est inférieure à une première vitesse de référence et aucun des critères de vérité correspond à un état sûr de zone non éclairée ;
- OU si la vitesse du véhicule est inférieure à une deuxième vitesse de référence ;
   - Alors le mode d'éclairage des projecteurs demeure en position code ;
   - Sinon, le mode d'éclairage des projecteurs est ajusté en position route.
- Lorsque l'état des projecteurs du véhicule est initialement en position route :
   - Si la vitesse du véhicule est supérieure à une première vitesse de référence ;
      - Si au moins un objet a été validé ;
      - Ou si au moins deux critères de vérité correspondent à un état sûr de zone éclairée ;
         - Alors le mode d'éclairage des projecteurs est ajusté en position code ;
   - Si la vitesse du véhicule est inférieure à la première vitesse de référence ;
      - Si au moins un objet a été validé ;
      - Ou si au moins deux critères de vérité correspondent à un état probable de zone éclairée ou à un état sûr de zone éclairée ;
         - Alors le mode d'éclairage des projecteurs est ajusté en position code ;
         - Sinon, le mode d'éclairage des projecteurs demeure en position route.
- Des paramètres du véhicule sont :
   - un angle au volant ; et/ou
   - une vitesse ; et/ou
   - un angle d'assiette.

Les paramètres angle au volant et vitesse permettent d'éviter des commutations code-route intempestives et ainsi d'obtenir une stabilité. L'angle d'assiette permet d'ajuster verticalement les régions d'intérêt déterminées.

Selon un deuxième objet de l'invention, elle concerne un dispositif d'ajustement de l'éclairage de projecteurs pour véhicule automobile, comportant :
- Une unité de contrôle :
   - pour détecter des objets éclairants en :
      - Déterminant une première région d'intérêt dans une image acquise par une caméra vidéo du véhicule ;
      - Effectuant une extraction des objets dans ladite première région d'intérêt, un objet extrait correspondant à une pluralité de pixels successifs ayant une valeur supérieure à un premier niveau de gris ;
      - Sélectionnant les objets extraits qui ont une taille supérieure à une taille déterminée ;
   - et pour déterminer un mode d'éclairage des projecteurs du véhicule automobile en fonction :
      - des objets sélectionnés, lesdits objets sélectionnés correspondant à des objets éclairants ; et
      - de paramètres propres au véhicule.

Selon un mode de réalisation non limitatif, le dispositif d'ajustement comporte en outre la caractéristique selon laquelle l'unité de contrôle permet en outre de déterminer des zones éclairées par les objets éclairants en :
- Déterminant une deuxième région d'intérêt dans une image acquise par une caméra vidéo du véhicule ; et
- Mesurant un degré d'éclairement dans ladite deuxième région d'intérêt.

Selon un troisième objet de l'invention, elle concerne un produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes.

D'autres caractéristiques et avantages de la présente invention seront mieux compris à l'aide de la description et des dessins non limitatifs parmi lesquels :
- la Fig. 1 représente un diagramme d'un mode de réalisation non limitatif du procédé d'ajustement selon l'invention ;

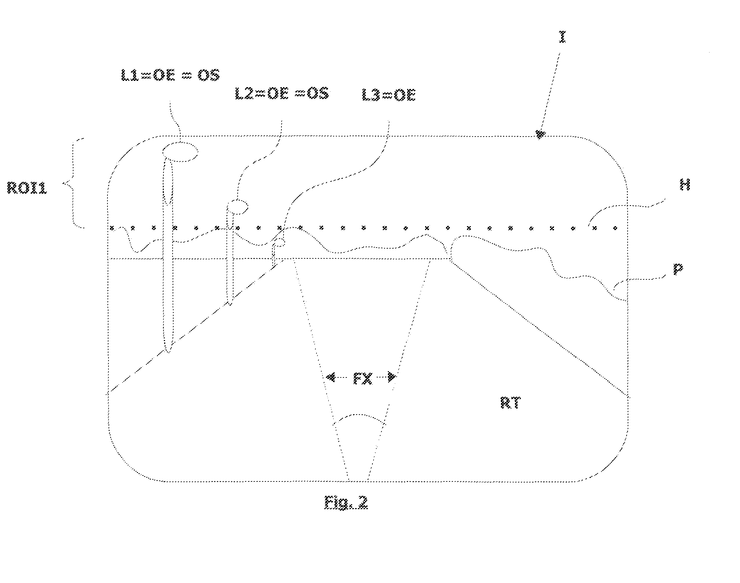

- la Fig. 2 représente une image utilisée dans une première étape du procédé d'ajustement de la Fig. 1 dans laquelle une première région d'intérêt est déterminée ;
- la Fig. 3 est un diagramme détaillant une étape supplémentaire de mesure d'un degré d'éclairement selon le procédé d'ajustement de la Fig. 1 ;
- la Fig. 4 représente une image utilisée dans l'étape de la Fig. 3 ;
- la Fig. 5 est un premier diagramme montrant une valeur moyenne de pixels dans un image de la Fig. 3 permettant de mesurer le degré d'éclairement ;
- la Fig. 6 est un deuxième diagramme montrant un nombre de pixels dans une image de la Fig. 3 dont la valeur est supérieure à un seuil déterminé permettant de mesurer le degré d'éclairement ;
- la Fig. 7 est un troisième diagramme montrant une entropie dans un image de la Fig. 3 permettant de mesurer le degré d'éclairement ;
- la Fig. 8 est un premier organigramme détaillant une étape supplémentaire de stratégie d'ajustement des projecteurs du véhicule selon un premier mode de réalisation, selon le procédé d'ajustement de la Fig. 1 ;
- la Fig. 9 est un deuxième organigramme détaillant une étape supplémentaire de stratégie d'ajustement des projecteurs du véhicule selon un deuxième mode de réalisation, selon le procédé d'ajustement de la Fig. 1 ;
- la Fig. 10 est un troisième organigramme détaillant une étape supplémentaire de stratégie d'ajustement des projecteurs du véhicule selon un troisième mode de réalisation, selon le procédé d'ajustement de la Fig. 1 ; et
- la Fig. 11 illustre un mode de réalisation non limitatif d'un dispositif de mise en oeuvre du procédé de la Fig. 1.

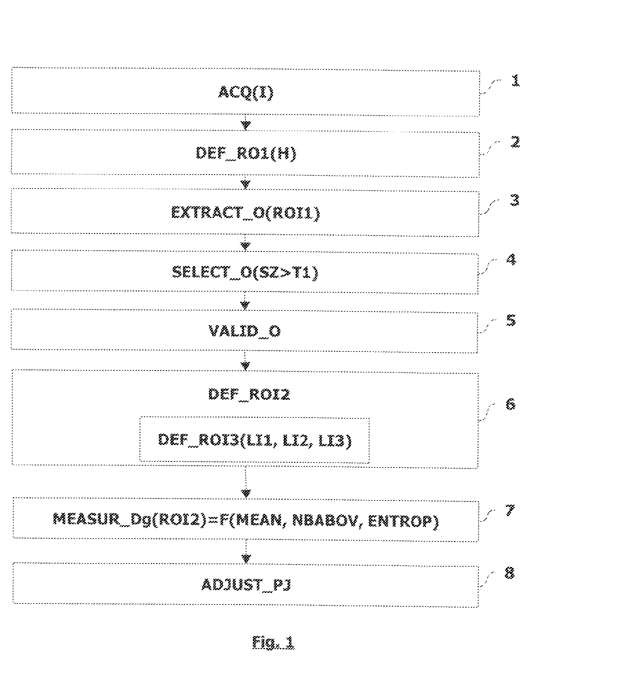

Le procédé d'ajustement de l'éclairage de projecteurs pour véhicule automobile, selon l'invention, est décrit dans un mode de réalisation non limitatif à la Fig. 1. Par véhicule automobile, on entend tout véhicule comprenant un moteur.

Comme on va le voir ci-après, le procédé va permettre de détecter d'une part des objets éclairants représentatifs de l'éclairage public, tels que des lampadaires, et d'autre part des zones éclairées de nuit de la route RT sur laquelle circule un véhicule automobile V.

Ces deux détections vont permettre de déterminer si le véhicule V circule dans un environnement éclairé ou non (ville, hors ville, autoroute éclairée ou non etc.), et ainsi permettre l'ajustement des projecteurs PJ du véhicule en position route R_MOD (plein phare) ou position code C_MOD (feux de croisement).

### Détection d'objets éclairants

Le procédé d'ajustement comporte les étapes suivantes telles qu'illustrées à la Fig 1:
Il comporte une étape de détection d'objets éclairants comportant les sous-étapes de :
   - Déterminer une première région d'intérêt ROI1 dans une image acquise I par une caméra vidéo CAM du véhicule V (étape DEF_RO1(H));
   - Extraire au moins un objet O dans ladite première région d'intérêt ROI1 déterminée, l'objet extrait OE correspondant à une pluralité de pixels PX successifs ayant une valeur supérieure à un premier niveau de gris G1 (étape EXTRACT_O(ROI1));
   - Sélectionner les objets extraits OE qui ont une taille SZ supérieure à une taille déterminée T1 (étape SELECT_O(SZ>T1));
   et une étape de déterminer un mode d'éclairage des projecteurs PJ du véhicule automobile en fonction (étape ADJUST_PJ):
   - des objets sélectionnés OS, et
   - de paramètres propres PV au véhicule V.

Dans un mode de réalisation non limitatif, le procédé comporte en outre les étapes supplémentaires de :
- Valider la sélection d'un objet O en fonction de sa trajectoire TRJ déterminée dans une séquence d'images SQ (étape VALID_O(TRJ)).

On notera enfin que dans un mode de réalisation non limitatif, le procédé comporte en outre une étape supplémentaire :
- D'acquisition d'images de l'environnement du véhicule V considéré par au moins une caméra vidéo CAM (étape ACQ(I)).

On notera que cette étape peut ne pas être comprise dans le procédé décrit, mais peut faire partie d'un autre procédé exécuté en amont du procédé décrit.

Pour la suite de la description, dans le mode de réalisation non limitatif décrit, le procédé comprend les étapes supplémentaires décrites ci-dessus.

Les étapes du procédé sont décrites en détail ci-après.

**Dans une première étape 1),** on acquiert une séquence SQ d'images I par au moins une caméra vidéo CAM. L'acquisition d'images I par une caméra CAM sur un véhicule V, étant connue de l'homme du métier, elle n'est pas décrite ici.

**Dans une deuxième étape 2),** on détermine une première région d'intérêt ROI1 dans une image acquise I par une caméra vidéo CAM du véhicule V.

Dans un mode de réalisation non limitatif, la première région d'intérêt ROI1 se situe au dessus de l'horizon H dans l'image acquise I. Cette région d'intérêt ROI1 suffit pour détecter les objets éclairants tels que les lampadaires qui se situent toujours au dessus de l'horizon. On améliore ainsi le temps de traitement sur l'image acquise I.

On notera que selon une variante de réalisation non limitative, l'horizon H dans l'image acquise I est déterminé en fonction de l'assiette du véhicule V.

Ainsi, à partir de l'information des capteurs d'assiette. On définit un horizon quand le véhicule est à l'horizontale puis quand il y a du tangage, on modifie la position du véhicule en fonction de l'angle retourne par les capteurs d'assiette.

Si on ne prend pas l'information des capteurs d'assiette, des phares de véhicules venant en face du véhicule considéré peuvent se retrouver dans la première région d'intérêt ROI1 (ou au contraire des lampadaires ne plus s'y trouver), ce qui entraînerait des erreurs dans la détection.

**Dans une troisième étape 3),** on extrait au moins un objet O dans ladite première région d'intérêt ROI1 déterminée, l'objet extrait OE correspondant à une pluralité de pixels PX successifs ayant une valeur supérieure à un premier niveau de gris G1 représentatif d'un éclairage public tel que les lampadaires.

Des pixels successifs sont des pixels qui se touchent.

Cela permet d'extraire les lampadaires qui éclairent la route.

On notera que le niveau de gris G1 dépend des caractéristiques de la caméra CAM utilisée (résolution, dynamique, temps d'intégration). Dans un exemple de réalisation non limitatif, le premier niveau de gris G1 est égale à 300 pour une caméra 10 bits.

On obtient ainsi un ou plusieurs objets extraits OE.

**Dans une quatrième étape 4),** on sélectionne les objets extraits OE qui ont une taille SZ supérieure à une taille déterminée T1.

Dans un exemple de réalisation non limitatif, la taille déterminée T1 est égale à 5*5 pixels.

Dans un mode de réalisation non limitatif, on sélectionne les objets extraits qui ont une taille SZ inférieure à une deuxième taille déterminée T2. Dans un exemple de réalisation non limitatif, la taille déterminée T2 est égale à 50*50 pixels.

On vérifie ainsi la taille des objets extraits et on ne prend pas en compte les objets trop petits ou trop grands et donc disproportionnés.

On élimine ainsi, d'une part, des objets extraits qui pourraient être des lampadaires vu de loin, des phares de voitures ou encore de l'éclairage d'habitation (on ne permutera pas en mode d'éclairage code lorsqu'on est encore trop loin d'un environnement éclairé), et d'autre part, des objets extraits qui prendraient trop de temps de calcul de par leur taille trop grande.

On obtient ainsi un ou plusieurs objets sélectionnés OS.

On notera que les lampadaires de route ayant différentes formes, on ne se soucie pas de la forme de l'objet sélectionné.

Bien entendu, dans un mode de réalisation non limitatif, on peut ajouter une étape dans laquelle, on sélectionne un objet extrait OE en fonction de sa taille mais également de sa forme.

**Dans une cinquième étape 5),** on valide la sélection d'un objet OS en tant qu'objet éclairant et représentatif d'un lampadaire.

Dans un premier mode de réalisation, on valide les objets sélectionnés qui se trouvent tout en haut de l'image acquise. Cela permet de ne pas éliminer les lampadaires qui apparaissent très tard dans une image, en raison du fait qu'ils étaient cachés à l'image précédente ou que la route sur laquelle circule le véhicule était en courbe.

Dans un deuxième mode de réalisation non limitatif, on valide un objet OS sur une séquence d'images acquises SQ.

Bien entendu, ces deux modes peuvent être combinés.

Dans une première variante de réalisation non limitative de ce deuxième mode de réalisation, la validation d'un objet sélectionné OS s'effectue en fonction du nombre de fois où il apparaît dans une séquence d'images SQ. Autrement dit, la validation s'effectue en fonction du nombre d'images I dans lequel l'objet sélectionné OS apparaît dans une séquence SQ. Ainsi dans un exemple non limitatif, s'il apparaît au moins dans trois images I, on valide cet objet en tant que lampadaire.

Dans une deuxième variante de réalisation non limitatif, la validation s'effectue en fonction de la trajectoire TRJ d'un objet sélectionné OS dans la séquence d'images SQ.

Dans des modes de réalisation non limitatifs, la trajectoire TRJ d'un objet est définie au moyen de méthodes telles que les méthodes linéaire ou de Kalman. Ces méthodes étant connues de l'homme du métier, elles ne seront pas décrites ici.

Ainsi, dans un exemple non limitatif, on valide les objets dont les trajectoires vont du centre d'une première image acquise I de la séquence SQ d'images acquises vers les coins supérieurs de la dernière image acquise I de la séquence SQ d'images.

Ce critère de trajectoire TRJ est un critère supplémentaire qui permet de fiabiliser la détection de l'éclairage de nuit tel que des lampadaires.

On notera qu'en pratique lorsque l'on valide un objet O, dans un mode de réalisation non limitatif, on positionne un fanion à l'état 1.

Dans un mode de réalisation non limitatif, comme la validation d'un objet prend un certain temps et comme la distance entre deux lampadaires peut être importante (de l'ordre de 50 mètres par exemple) en raison par exemple d'un lampadaire qui est abîmé, une temporisation TP est déclenchée à la suite d'une validation d'un objet sélectionné OS.

Dans une variante de réalisation non limitative, la temporisation TP est définie en mètres et est fonction de la vitesse VIT du véhicule dans cette temporisation. Par exemple 40km/h correspond à faire 50 mètres en 4,5 secondes. Cela évite de vérifier la vitesse du véhicule à chaque image.

La temporisation TP est appliquée de la manière suivante sur une séquence d'images SQ.
- Si l'objet validé en premier dans une image acquise I de la séquence d'images acquise SQ ne se retrouve plus dans l'image suivante de la séquence et s'il n'existe plus aucun objet sélectionné dans l'image suivante I+1,
   - Alors la temporisation TP est égale à 25 mètres, dans un exemple non limitatif (il y a une forte probabilité que le véhicule se trouve dans un environnement non éclairé). On attend donc un nombre d'images correspondant à 25 mètres avant d'effectuer les étapes suivantes 7) et/ou 8) ;
   - Sinon cela veut dire qu'il existe un objet sélectionné au loin, la temporisation TP est égale à 50 mètres, (il y a une forte probabilité que le véhicule se trouve dans un environnement encore éclairé). On attend donc un nombre d'images correspondant à 50 mètres avant d'effectuer les étapes suivantes 7) et/ou 8) ;
- On effectue les étapes 1) à 5) décrites précédemment pour l'image suivante I+2 etc et pour les images suivantes jusqu'à la fin des images correspondant à la temporisation TP ;
- Si au bout de cette temporisation TP, on n'a pas validé de nouvel objet, alors on positionne le fanion de validation à l'état 0 et on effectue les étapes suivantes 7) et/ou 8).

Ainsi, la temporisation TP réduite de 25 mètres permet de décider plus rapidement de se positionner en mode route lorsque le véhicule sort d'un environnement éclairé quand le dernier lampadaire n'est plus visible dans l'image acquise courante.

Par ailleurs, dans une variante de réalisation non limitative de la temporisation TP, toute temporisation TP supérieure à 5 secondes, lorsque l'on sort d'un environnement éclairé tel qu'une ville, est écartée. Cela permet de borner la temporisation et ne pas en avoir de trop longue. Le dispositif est ainsi plus réactif.

On notera que la validation sur une séquence d'images SQ s'effectue pour chaque objet sélectionné OS dans une image acquise I.

### Détection de zones éclairées de nuit

Afin d'avoir une fiabilité accrue dans la reconnaissance d'un environnement éclairé ou non, dans un mode de réalisation non limitatif, le procédé d'ajustement de l'éclairage des projecteurs comporte une étape supplémentaire dans laquelle on détermine des zones éclairées de nuit par les lampadaires.

Ajouté à la détection des lampadaires, cela permet de reconnaître plus sûrement si le véhicule se trouve dans un environnement éclairé ou non.

En effet, cela va être utile dans les cas suivants (non exhaustifs) :
- lorsque les lampadaires sont placés trop haut et sont donc peut-être hors du champ de la caméra ;
- lorsque la route est étroite, les lampadaires peuvent être également hors du champ de la caméra ;
- lorsqu'un ou plusieurs lampadaires ne fonctionnent pas ;
- lorsque la source lumineuse des lampadaires est cachée par des obstacles tels que des arbres (la détection des lampadaires selon les étapes de détection décrites précédemment est plus difficile).

Comme dans le cas de la détection d'objets éclairants, la détection de zones éclairées de nuit permet de prendre en compte l'environnement du véhicule et de détecter si le véhicule se trouve dans un environnement éclairé ou non, et d'adapter en conséquence le mode d'éclairage des projecteurs PJ du véhicule, contrairement à une solution qui ne prend en compte que la vitesse du véhicule pour adapter le mode d'éclairage du véhicule, cette dernière solution étant une solution peu fiable.

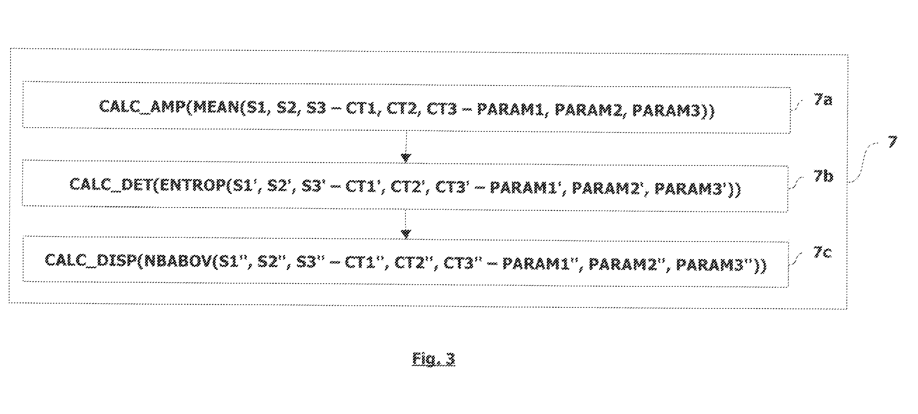

La détermination des zones éclairées s'effectue selon les étapes illustrées aux Fig. 1 et 3 :
- Déterminer une deuxième région d'intérêt ROI2 dans une image acquise I par une caméra vidéo CAM du véhicule V (sous-étape DEF_ROI2) ; et
- Mesurer un degré d'éclairement Dg dans ladite deuxième région d'intérêt ROI2 (étape MEASUR_Dg(ROI2) = F(MEAN, NBABOV,ENTROP)).

Dans un mode de réalisation non limitatif, cette détermination comporte en outre une étape supplémentaire de :
- supprimer de la deuxième région d'intérêt ROI2 une troisième région d'intérêt ROI3 représentative d'une zone éclairée par le faisceau lumineux FX des projecteurs PJ du véhicule V (étape DEL_ROI3(LI1, L12, LI3)).

Ces étapes sont décrites ci-après.

**Ainsi, dans une sixième étape 6),** on détermine la deuxième région d'intérêt ROI2 dans une image acquise I par une caméra vidéo CAM du véhicule V.

Cette deuxième région d'intérêt ROI2 est représentative des zones dans une image acquise I qui peuvent être éclairées par des lampadaires.

Cette détermination évite par la suite d'effectuer une détermination de zones éclairées sur toute une image. On gagne ainsi en temps de calcul.

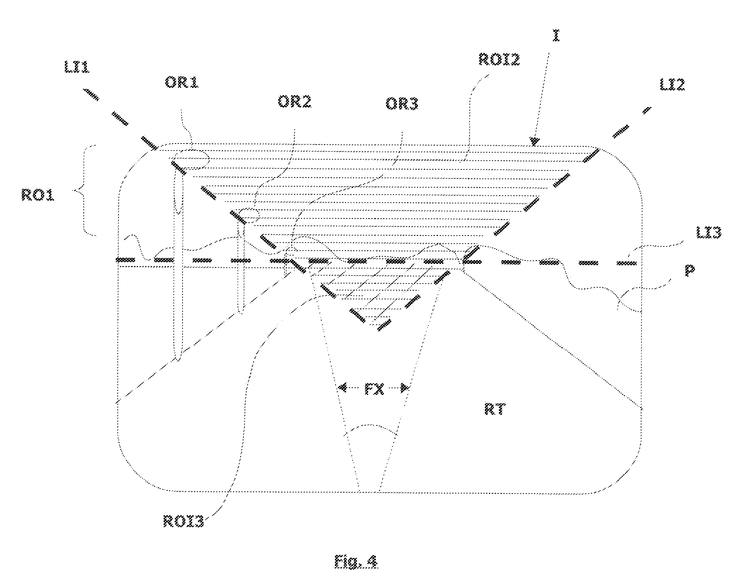

La deuxième région d'intérêt ROI2 est déterminée par l'intersection de deux lignes LI1 et LI2 dans l'image acquise I tel qu'illustré à la Fig. 4.

La première et deuxième lignes LI1 et LI2 sont des lignes passant par des diagonales à l'image I qui se situent en dessous de lampadaires OR de référence lorsque la route RT est une ligne droite.

Ces deux lignes LI1 et LI2 déterminent une région en forme de triangle qui est la deuxième région d'intérêt ROI2 telle qu'illustrée sur la Fig. 4 par des hachures horizontales.

Dans un mode de réalisation non limitatif, dans la deuxième région d'intérêt ROI2, on supprime une troisième région d'intérêt ROI3 représentative d'une zone éclairée par le faisceau lumineux FX des projecteurs PJ du véhicule V.

Dans un mode de réalisation non limitatif, la troisième région d'intérêt ROI3 est déterminée par l'intersection des deux premières lignes LI1 et LI2 définies dans la sous-étape précédente avec une troisième ligne horizontale L13. La troisième ligne LI3 est une ligne horizontale qui se situe au dessus de la partie supérieure du faisceau lumineux FX du véhicule V.

Ainsi, la troisième région d'intérêt ROI3 est en forme de triangle et est illustrée sur la Fig. 4 par des hachures en diagonale.

Le fait d'enlever cette troisième région d'intérêt ROI3 permet d'éviter de prendre en compte la zone éclairée par le faisceau lumineux FX des projecteurs PJ du véhicule, dans la détection des zones éclairées de nuit ZN.

En conséquence, la deuxième région d'intérêt ROI2 n'est plus en forme de triangle, mais est en forme de trapèze.

**Dans une septième étape 7),** on mesure un degré d'éclairement Dg dans la deuxième région d'intérêt déterminée ROI2.

Comme on va le voir ci-après, la mesure du degré d'éclairement Dg va permettre de déterminer les zones éclairées de nuit, et selon un mode de réalisation non limitatif, la mesure du degré d'éclairement Dg va s'effectuer au moyen de trois paramètres :
- l'amplitude de l'éclairement dans la deuxième région d'intérêt ROI2,
- le niveau de détail des informations contenues dans la deuxième région d'intérêt ROI2 ; et
- la répartition de l'éclairement dans la deuxième région d'intérêt ROI2.

Ces paramètres vont servir par la suite pour déterminer si le véhicule V se situe dans un environnement éclairé ou non et ainsi ajuster ses projecteurs PJ en conséquence.

Dans un mode de réalisation non limitatif, comme on va le voir ci-dessous, la détermination de chaque paramètre s'effectue sur une séquence d'images. Cela va permettre d'éviter des transitions intempestives entre un mode d'éclairage des projecteurs en position code et un autre en position route et vice et versa.

Les sous-étapes de cette septième étape sont décrites à la Fig. 3.

**Dans une première sous-étape 7a),** on détermine l'amplitude de l'éclairement dans la deuxième région d'intérêt ROI2 (sous-étape CALC_AMP(MEAN(S1, S2, S3 - CT1, CT2, CT3 - PARAM1, PARAM2, PARAM3))).

Cela donne une moyenne sur toute la deuxième région d'intérêt ROI2.

A cet effet, dans un mode de réalisation non limitatif, on calcule la valeur moyenne MEAN de la valeur des pixels PX dans cette deuxième région d'intérêt ROI2. La valeur moyenne MEAN est égale à la somme des valeurs des pixels PX divisée par le nombre de pixels PX dans une image I.

Dans un mode de réalisation non limitatif, la détermination de l'amplitude de l'éclairement dans la deuxième région d'intérêt est effectuée sur une séquence d'images SQ, en conséquence le calcul de la valeur moyenne MEAN est effectué sur une séquence d'images SQ.

Cela permet de filtrer les fluctuations de la valeur moyenne MEAN qui peuvent survenir d'une image à une autre, et ainsi rendre plus fiable et stabiliser le calcul de la valeur moyenne MEAN.

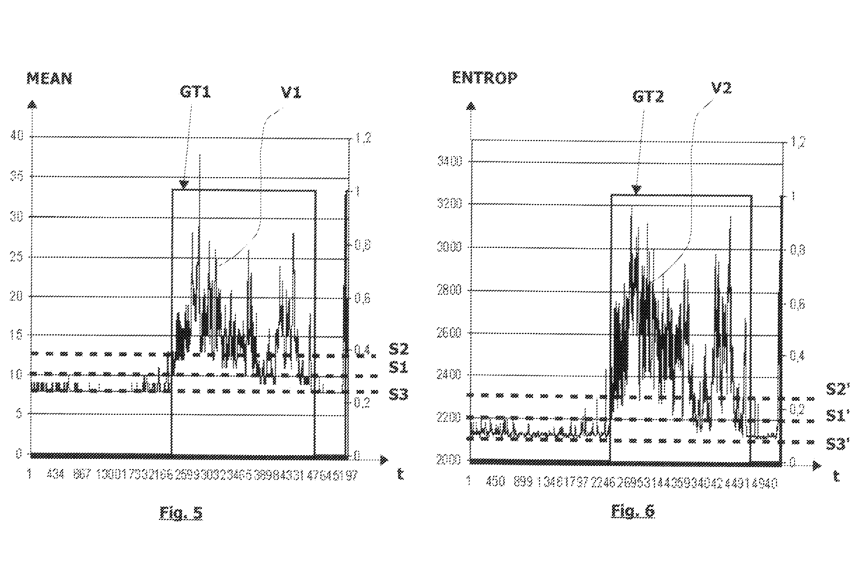

Un exemple non limitatif de variation de la valeur moyenne MEAN prise sur une séquence d'image SQ, est illustré sur le diagramme de la Fig. 5.

Dans un mode de réalisation non limitatif, on détermine un premier seuil S1 qui permet de déterminer en fonction de la valeur moyenne MEAN, si le véhicule se trouve de façon probable ans une zone éclairée ou non.

Dans un mode de réalisation non limitatif, on détermine en outre :
- un deuxième seuil S2 qui permet de déterminer en fonction de la valeur moyenne V1, si le véhicule se trouve de façon certaine dans une zone éclairée ; et
- un troisième seuil S3 qui permet de déterminer en fonction de la valeur moyenne V1, si le véhicule se trouve de façon certaine dans une zone non éclairée.

Comme on va le voir par la suite, ces deux seuils supplémentaires vont permettre d'ajuster le mode des projecteurs PJ du véhicule de façon plus rapide.

Sur la Fig. 5, le temps t est représenté en abscisse, tandis que la moyenne MEAN est représentée en ordonnée. Sur ce diagramme sont représentés :
- les valeurs V1 de la valeur moyenne MEAN de la valeur des pixels PX;
- le premier seuil S1 ;
- le deuxième seuil S2 ; et
- le troisième seuil S3.

Dans un exemple non limitatif, le premier seuil S1 est égal à 10.

Ainsi, si la valeur moyenne V1 se situe au dessus de ce premier seuil S1, on peut en déduire que le véhicule se trouve probablement dans une zone éclairée. Dans le cas contraire, on peut en déduire que le véhicule se trouve probablement dans une zone non éclairée.

Dans un exemple non limitatif, le deuxième seuil S2 est égal à 12. Ainsi, si la valeur moyenne V1 se situe au dessus de ce deuxième seuil S2, on peut en déduire que le véhicule se trouve de façon sûre et certaine dans une zone éclairée.

Dans un exemple non limitatif, le troisième seuil S3 est égal à 8.

Ainsi, si la valeur moyenne V1 se situe en dessous de ce troisième seuil S3, on peut en déduire que le véhicule se trouve de façon sûre et certaine dans une zone non éclairée.

Dans un mode de réalisation non limitatif, à chaque seuil S1, S2, S3 est associé respectivement un compteur CT1, CT2, CT3 qui permet de déterminer un nombre de fois où ledit seuil associé est atteint sur une séquence d'images SQ.

Un compteur est initialisé à 0.

Un compteur est incrémenté à chaque fois que la valeur moyenne MEAN dépasse le seuil associé, une valeur V1 de la valeur moyenne MEAN étant calculée à chaque image acquise I de la séquence d'images SQ.

Par ailleurs, à chaque compteur CT1, CT2, CT3 est associé respectivement un critère de vérité PARAM1, PARAM2, PARAM3 qui est activé à 1, i.e. qui est marqué vrai, lorsque le compteur associé atteint un nombre de temporisation donné NB_CT.

Un critère de vérité est initialisé à 0, i.e à faux.

Ainsi, la détermination de l'amplitude de l'éclairement dans la deuxième région d'intérêt ROI2 en fonction de la valeur moyenne MEAN est effectuée de la manière suivante.

A chaque image I de la séquence d'images SQ considérée :
- On détermine une valeur V1 de la valeur moyenne MEAN ;
- On compare cette valeur V1 au différents seuils S1, S2, S3, et selon le résultat de la comparaison, on incrémente le compteur CT1, CT2, CT3 associé au seuil considéré S1, S2, ou S3 lorsque la valeur V1 dépasse ledit seuil considéré (pour S1 et S2) ou est inférieur au seuil considéré (pour S3). On notera que si la valeur V1 dépasse le premier seuil S1 et le deuxième seuil S2, seul le compteur associé CT2 au deuxième seuil S2 est incrémenté; si la valeur V1 dépasse le premier seuil S1 mais est inférieur au deuxième seuil S2, le compteur CT1 associé au premier seuil S1 est incrémenté ; et enfin si la valeur V1 est inférieure au troisième seuil S3, le compteur CT3 associé est incrémenté.

Dès qu'un des compteurs atteint un nombre de temporisation donné NB_CT, le critère de vérité associé PARAM est activé à 1. Cela signifie que :
- le véhicule V se trouve dans une zone éclairée ou non respectivement si :
   - le critère de vérité PARAM1 est à 1 ce qui correspond à un état probable de zone éclairée ;
   - le critère de vérité PARAM1 est à 0 et tous les autres paramètres PARAM2 et PARAM3 sont à 0 ce qui correspond à un état probable de zone non éclairée ;
- le véhicule V se trouve de façon certaine dans une zone éclairée si :
   - le critère de vérité PARAM2 est à 1 ce qui correspond à un état sûr de zone éclairée ; et
- le véhicule V se trouve se trouve de façon certaine dans une zone non éclairée si :
   - le critère de vérité PARAM3 est à 1 ce qui correspond à un état sûr de zone non éclairée.

Dans un exemple non limitatif le nombre de temporisation NB_CT est égal à 20 (correspondant à 20 images pour une séquence SQ et à 2 secondes dans le cas d'une caméra qui acquiert 10 images/seconde).

Ainsi, un avantage de déterminer l'amplitude de l'éclairement dans la deuxième région d'intérêt ROI2 est d'éviter de considérer un environnement qui est non éclairé comme un environnement éclairé dans le cas où l'on déterminerait le degré d'éclairement uniquement en fonction d'un nombre de pixels PX dont la valeur se trouve au dessus d'un niveau de référence REF, comme on va le voir plus loin.

Par exemple, pour une caméra 12 bits, s'il existe un tiers des pixels PX d'une image acquise I dont la valeur se situe proche de 0 (couleur noir), un tiers dont la valeur se situe proche de 2048, et un tiers dont la valeur se situe proche de 4096 (couleur blanche), l'image acquise, représentative de l'environnement du véhicule V, sera très sombre bien qu'il existe un nombre de pixels PX important dont la valeur se situe proche de la couleur blanche par exemple.

**Dans une deuxième sous-étape 7b),** on détermine le niveau de détail des informations contenues dans la deuxième région d'intérêt ROI2 (sous-étape CALC_DET(ENTROP(S1', S2', S3' - CT1', CT2', CT3' - PARAM1', PARAM2', PARAM3'))).

Ce paramètre va servir également par la suite pour déterminer si le véhicule V se situe dans un environnement éclairé ou non et ainsi ajuster par la suite les projecteurs PJ.

A cet effet, dans un mode de réalisation non limitatif, on calcule l'entropie ENTROP d'une image. L'entropie ENTROP peut être calculée selon les méthodes de SHANON ou encore de la Matrice de cooccurrence, dans des exemples de réalisation non limitatifs. Ces méthodes étant bien connues de l'homme du métier, elles ne sont pas décrites ici.

En effet, sur des routes illuminées, par exemple, lorsque le véhicule V circule en ville, il existe une pluralité de détails représentatifs de la ville, l'entropie a une valeur élevée. Au contraire, sur des routes non illuminées, par exemple en dehors de la ville, à la campagne, l'image est plus homogène, l'entropie a une valeur plus faible.

Dans un mode de réalisation non limitatif, la détermination du niveau de détail des informations contenues dans la deuxième région d'intérêt ROI2 est effectuée sur une séquence d'images SQ, en conséquence le calcul de l'entropie ENTROP est effectué sur une séquence d'images SQ.

Cela permet de filtrer les fluctuations de l'entropie ENTROP qui peuvent survenir d'une image à une autre, et ainsi rendre plus fiable et stabiliser le calcul de l'entropie.

Un exemple non limitatif de valeurs V2 d'entropie ENTROP prise sur une séquence d'image SQ est illustré sur le diagramme de la Fig. 6.

Trois seuils S1', S2' et S3' sont déterminés de la même façon que dans le cas de la valeur moyenne MEAN vue précédemment, en fonction de l'entropie ENTROP, pour savoir si on se trouve dans une zone éclairée ou non, et ce de façon certaine ou uniquement probable.

De la même manière, trois compteurs CT1', CT2', et CT3' associés respectivement à ces trois seuils S1', S2' et S3' sont déterminés, ainsi que trois paramètres PARAM1', PARAM2', PARAM3' associés respectivement à ces trois compteurs CT1', CT2', et CT3'.

La même signification pour ces compteurs et paramètres est à prendre en compte, comme vu précédemment avec la valeur moyenne MEAN, mais appliquée à l'entropie ENTROP.

Sur la Fig. 6, le temps t est représenté en abscisse, tandis que l'entropie ENTROP est représentée en ordonnée. Sur ce diagramme sont représentés :
- les valeurs V2 de l'entropie ENTROP ;
- le premier seuil S1' ;
- le deuxième seuil S2' ; et
- le troisième seuil S3'.

Dans un exemple non limitatif, le premier seuil S1' est égal à 2200.

Ainsi, si la valeur V2 de l'entropie ENTROP se situe au dessus de ce premier seuil S1', on peut en déduire que le véhicule se trouve dans une zone éclairée. Dans le cas contraire, on peut en déduire que le véhicule se trouve dans une zone non éclairée.

Dans un exemple non limitatif, le deuxième seuil S2' est égal à 2300.

Ainsi, si la valeur V2 de l'entropie ENTROP se situe au dessus de ce deuxième seuil S2', on peut en déduire que le véhicule se trouve de façon sûre dans une zone éclairée.

Dans un exemple non limitatif, le troisième seuil S3' est égal à 2100.

Ainsi, si la valeur V2 de l'entropie ENTROP se situe en dessous de ce troisième seuil S3', on peut en déduire que le véhicule se trouve de façon sûre dans une non zone éclairée.

Ainsi, la détermination du niveau de détail des informations contenues dans la deuxième région d'intérêt ROI2 en fonction de l'entropie ENTROP est effectuée de la manière suivante.

A chaque image I de la séquence d'images SQ considérée :
- On détermine une valeur V2 de l'entropie ;
- On compare cette valeur V2 au différents seuils S1', S2', S3', et selon le résultat de la comparaison, on incrémente le compteur CT1', CT2', CT3' associé au seuil considéré S1', S2', ou S3' lorsque la valeur V2 dépasse ledit seuil considéré (pour S1', S2') ou est inférieure au seuil considéré (pour S3'). Les compteurs CT1', CT2', CT3' sont incrémentés de la même manière que ce qui a été décrit dans la première sous-étape 7a).

De la même manière que dans la première sous-étape 7a), dès qu'un des compteurs atteint le nombre de temporisation donné NB_CT, le critère de vérité associé PARAM' est activé à 1.

Les mêmes conclusions sont appliquées que précédemment.

**Dans une troisième sous-étape 7c),** on détermine la répartition de l'éclairement dans la deuxième région d'intérêt ROI2 (sous-étape CALC_DISP(NBABOV(S1", S2", S3" - CT1", CT2", CT3" - PARAM1", PARAM2", PARAM3"))), c'est-à-dire la répartition des niveau de gris dans la deuxième région d'intérêt ROI2.

Ce paramètre va servir également par la suite pour déterminer si le véhicule V se situe dans un environnement éclairé ou non et ainsi ajuster par la suite les projecteurs PJ.

On détermine ainsi la luminosité moyenne sur toute la deuxième région d'intérêt ROI2. On connaît ainsi la répartition de l'éclairement sur toute la région ROI2.

En effet, sur des routes non éclairées, par exemple, lorsque le véhicule V circule en campagne, il se peut que sur une route ascendante, le véhicule V se retrouve devant d'un véhicule arrivant en face et dont les projecteurs en mode position route, donc plein phare.

On a donc quelques pixels PX uniquement qui font monter la valeur moyenne MEAN des pixels dans la région d'intérêt ROI2. Si seul le paramètre d'amplitude est utilisé, comme décrit dans la première sous-étape 7a), cela peut engendrer des erreurs quand à la détermination de l'éclairage d'une zone.

Comme on va le voir ci-après, ce troisième paramètre évite de conclure que le véhicule V se trouve dans un environnement éclairé s'il existe une unique source lumineuse telle que l'éclairage de projecteurs PJ d'un véhicule arrivant en face du véhicule V considéré.

A cet effet, dans un mode de réalisation non limitatif, on calcule le nombre de pixels NBABOV dont la valeur se situe au dessus d'un niveau de référence REF.

Dans un exemple non limitatif, le niveau de référence REF est égal à la moyenne des pixels dans une image.

Dans un mode de réalisation non limitatif, la détermination de la répartition de l'éclairement dans la deuxième région d'intérêt ROI2 est effectuée sur une séquence d'images SQ. En conséquence le calcul du nombre de pixels NBABOV est effectué sur une séquence d'images SQ.

Cela permet de filtrer les fluctuations du nombre de pixels NBABOV qui peuvent survenir d'une image à une autre, et ainsi rendre plus fiable et stabiliser le calcul du nombre de pixels NBABOV.

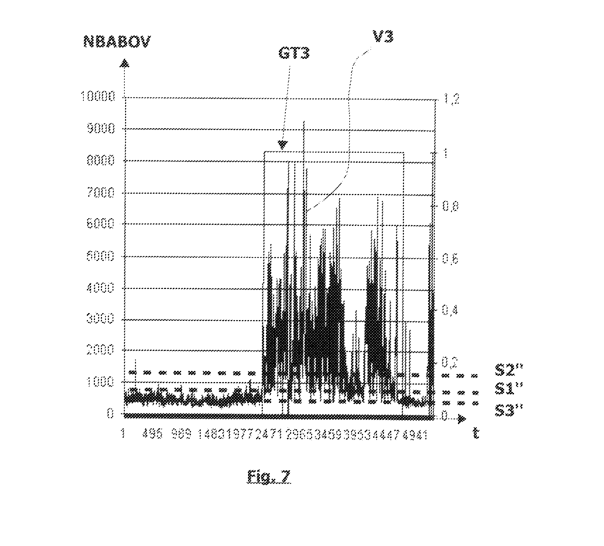

Un exemple non limitatif de valeurs V3 du nombre de pixels NBABOV pris sur une séquence d'images SQ est illustré sur le diagramme de la Fig. 7.

Trois seuils S1", S2" et S3" sont déterminés de la même façon que dans le cas de la valeur moyenne MEAN ou de l'entropie ENTROP vues précédemment, en fonction du nombre de pixels NBABOV, pour savoir si on se trouve dans une zone éclairée ou non, et ce de façon sûre ou uniquement probable non.

De la même manière, trois compteurs CT1", CT2", et CT3" associés respectivement à ces trois seuils S1", S2" et S3" sont déterminés, ainsi que trois paramètres PARAM1", PARAM2", PARAM3" associés respectivement à ces trois compteurs CT1", CT2", et CT3".

La même signification pour ces compteurs et paramètres est à prendre en compte, comme vu précédemment avec la valeur moyenne MEAN ou l'entropie ENTROP, mais appliquée au nombre de pixels NBABOV.

Sur la Fig. 7, le temps t est représenté en abscisse, tandis que le nombre de pixels NBABOV est représenté en ordonnée. Sur ce diagramme sont représentés :
- les valeurs V3 du nombre de pixels NBABOV qui sont au dessus de la valeur de référence REF ;
- le premier seuil S1" ;
- le deuxième seuil S2" ; et
- le troisième seuil S3".

Dans un exemple non limitatif, le premier seuil S1" est égal à 900.

Ainsi, si la valeur V3 du nombre de pixels NBABOV se situe au dessus de ce premier seuil S1", on peut en déduire que le véhicule se trouve dans une zone éclairée. Dans le cas contraire, on peut en déduire que le véhicule se trouve dans une zone non éclairée.

Dans un exemple non limitatif, le deuxième seuil S2" est égal à 1100.

Ainsi, si la valeur V3 du nombre de pixels NBABOV se situe au dessus de ce deuxième seuil S2", on peut en déduire que le véhicule se trouve de façon sûre dans une zone éclairée.

Dans un exemple non limitatif, le troisième seuil S3" est égal à 500.

Ainsi, si la valeur V3 du nombre de pixels NBABOV se situe en dessous de ce troisième seuil S3", on peut en déduire que le véhicule se trouve de façon sûre dans une non zone éclairée.

Ainsi, la détermination de la répartition de l'éclairement dans la deuxième région d'intérêt ROI2 en fonction du nombre de pixels NBABOV est effectuée de la manière suivante. A chaque image I de la séquence d'images SQ considérée :
- On détermine une valeur V3 du nombre de pixels NBABOV ;
- On compare cette valeur V3 au différents seuils S1", S2", S3", et selon le résultat de la comparaison, on incrémente le compteur CT1", CT2", CT3" associé au seuil considéré S1", S2", ou S3" lorsque la valeur V3 dépasse ledit seuil considéré (pour S1" et S2") et inférieure au seuil considéré (pour S3"). Les compteurs CT1", CT2", CT3" sont incrémentés de la même manière que ce qui a été décrit dans la première sous-étape 7a).

De la même manière que dans la première sous-étape 7a) ou dans la deuxième sous-étape 7b), dès qu'un des compteurs atteint le nombre de temporisation NB_CT, le critère de vérité associé PARAM" est activé à 1.

Les mêmes conclusions sont appliquées que précédemment.

On notera que bien entendu, dans un mode de réalisation non limitatif, ces trois sous-étapes 7a), 7b) et 7c) peuvent être effectuées en parallèle l'une de l'autre.

On notera que les valeurs données à titre d'exemple non limitatifs pour les seuils S1, S2, S3; S1', S2', S3'; S1", S2", S3" sont des valeurs pour une caméra en noir et blanc.

Dans un autre exemple non limitatif, les seuils S1, S2, S3; S1', S2', S3'; S1", S2", S3" peuvent prendre comme valeur respective la valeur 5, 9, 3 ; 1900, 2100, 1300 et 20, 30, 5 pour une caméra couleur.

### Ajustement du mode d'éclairage des projecteurs du véhicule :

Ainsi, après voir détecté des zones éclairées de nuit et des objets **éclairants, dans une huitième étape 8),** on détermine le mode d'éclairage des projecteurs PJ du véhicule automobile.

Trois modes de réalisation non limitatifs d'ajustement de l'éclairage des projecteurs PJ sont décrits :
- en fonction des objets sélectionnés OS et des paramètres propres PV au véhicule V ; ou
- en fonction du degré d'éclairement Dg, des objets validés, et des paramètres propres au véhicule ; ou
- en fonction du degré d'éclairement Dg et des paramètres propres PV au véhicule V.

Dans un mode de réalisation non limitatif, les paramètres propres au véhicule sont :
- son angle au volant α ; et/ou
- sa vitesse VIT.

Dans un mode de réalisation non limitatif, un paramètre supplémentaire du véhicule est un angle d'assiette permettant d'ajuster verticalement les régions d'intérêt précédemment citées.

Bien entendu, un seul des trois paramètres peut être utilisé, ou deux en combinaison comme décrit dans l'exemple ci-dessous, ou les trois en combinaison.

### Premier mode de réalisation

Dans un premier mode de réalisation non limitatif, on détermine un mode d'éclairage des projecteurs PJ du véhicule automobile en fonction:
- des objets sélectionnés OS à la quatrième étape 4), et
- de paramètres propres PV au véhicule V.

Cela veut dire que l'on détermine le mode d'éclairage des projecteurs en fonction de la détection d'objets éclairants.

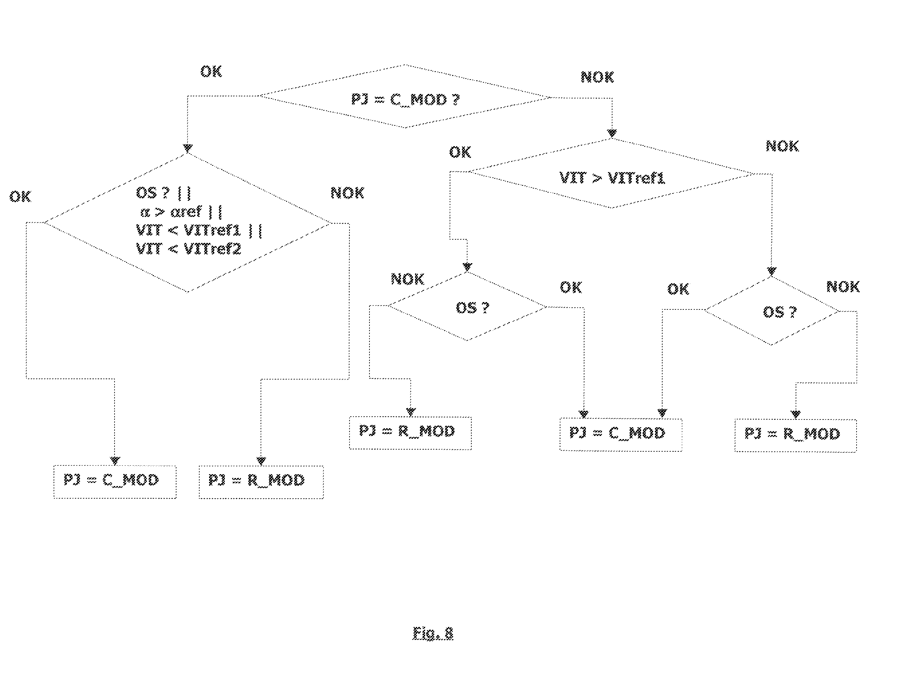

La détermination selon ce premier mode de réalisation s'effectue selon les étapes suivantes illustrées sur le diagramme de la Fig. 8.

Dans le cas où l'état des projecteurs PJ du véhicule V est initialement en position code C_MOD, i.e. que le véhicule se trouve dans un environnement éclairé :
- Si au moins un objet (i.e des lampadaires) a été sélectionné, (cela veut dire que l'on est dans un environnement éclairé) ;
- Ou si l'angle au volant α est supérieur à un angle de référence αref ;
- Ou si sa vitesse VIT est inférieure à une première vitesse de référence VITref1 ;
- OU si sa vitesse VIT est inférieure à une deuxième vitesse de référence VITref2 ;
- Alors l'état des projecteurs PJ est figé : on demeure en position code C_MOD ;
- Sinon, l'état des projecteurs PJ est modifié : on ajuste le mode d'éclairage des projecteurs PJ en position route R_MOD.

On notera que dans les virages serrés, on peut perdre des lampadaires, ils ne sont donc pas sélectionnés. De plus, il est rare de sortir d'un environnement éclairé, par exemple d'une ville, ou d'entrer dans un environnement éclairé, dans un virage serré. On part donc de l'hypothèse, que lorsque l'angle au volant α est supérieur à l'angle de référence αref, cela signifie que l'on est toujours dans l'environnement éclairé dans lequel circule le véhicule V (les projecteurs PJ étant initialement en position code C_MOD). On fige donc l'état actuel des projecteurs.

Dans un exemple de réalisation non limitatif, l'angle de référence αref est égal à 100°.

Par ailleurs, on notera également que l'on part de l'hypothèse que si la vitesse VIT du véhicule est inférieure à la première vitesse de référence VITref1, cela signifie que l'on est toujours dans l'environnement éclairé, par exemple en ville, dans lequel circule le véhicule V (les projecteurs PJ étant initialement en position code C_MOD). On fige donc l'état actuel des projecteurs.

Dans un mode de réalisation non limitatif, la première vitesse de référence VITref1 se situe dans un intervalle entre 30 et 50km/h. Bien entendu, d'autres valeurs peuvent être considérées telles que 60km/h par exemple.

Par ailleurs, on part également de l'hypothèse que lorsque l'on sort d'une zone éclairée, par exemple une ville, le véhicule V accélère. Autrement dit, il est peu probable que l'on sorte d'une zone éclairée sous cette première vitesse de référence VITref1. Donc si la vitesse VIT reste inférieure à cette première vitesse de référence VITref1, on demeure position code C_MOD.

Enfin, on part de l'hypothèse, qu'il n'est pas possible de sortir d'un environnement éclairé, par exemple d'une ville, à si faible vitesse, c'est-à-dire lorsque la vitesse du véhicule est inférieure à la deuxième vitesse de référence VITref2. Ainsi, dans un mode de réalisation non limitatif, la deuxième vitesse de référence VITref2 est comprise dans un intervalle entre 10 et 30km/h.

Dans le cas où l'état des projecteurs PJ du véhicule V est initialement en position route R_MOD, i.e. que le véhicule se trouve dans un environnement non éclairé :
- Si sa vitesse VIT est supérieure à la première vitesse de référence VITref1 ;
   - Si au moins un objet (i.e des lampadaires) a été sélectionné, (cela veut dire que l'on est dans un environnement éclairé) ;
      - Alors l'état des projecteurs PJ est modifié : on ajuste le mode d'éclairage des projecteurs PJ en position code C_MOD ;
      - Sinon, l'état des projecteurs PJ est figé : on demeure en position route R_MOD.
- Si sa vitesse VIT est inférieure à la première vitesse de référence VITref1 ;
   - Si au moins un objet (i.e des lampadaires) a été sélectionné, (cela veut dire que l'on est dans un environnement éclairé) :
      - Alors l'état des projecteurs PJ est modifié : on ajuste le mode d'éclairage des projecteurs PJ en position code C_MOD ;
   - Sinon, l'état des projecteurs PJ est figé : on demeure en position route R_MOD.

Dans un mode de réalisation non limitatif, la condition concernant le nombre d'objets sélectionnés est paramétrable. On peut décider de modifier l'état des projecteurs si un seul objet a été sélectionné, ou au moins deux objets ont été sélectionnés etc.

Dans un mode de réalisation non limitatif, on peut ajuster le mode d'éclairage en fonction d'un objet validé au lieu d'un objet sélectionné uniquement. On remplace la condition « Si au moins un objet a été sélectionné» par une condition « Si au moins un objet a été validé » dans les étapes d'ajustement décrites ci-dessus.

### Deuxième mode de réalisation

Dans un deuxième mode de réalisation non limitatif, on détermine le mode d'éclairage des projecteurs PJ du véhicule automobile en fonction en outre :
- des objets validés selon l'étape 6) vue précédemment ; et
- du degré d'éclairement Dg déterminé selon l'étape 7) vue précédemment.

Cela veut dire que l'on détermine le mode d'éclairage des projecteurs en fonction de la détection des objets éclairants et de la détection des zones éclairées de nuit par ces objets éclairants.

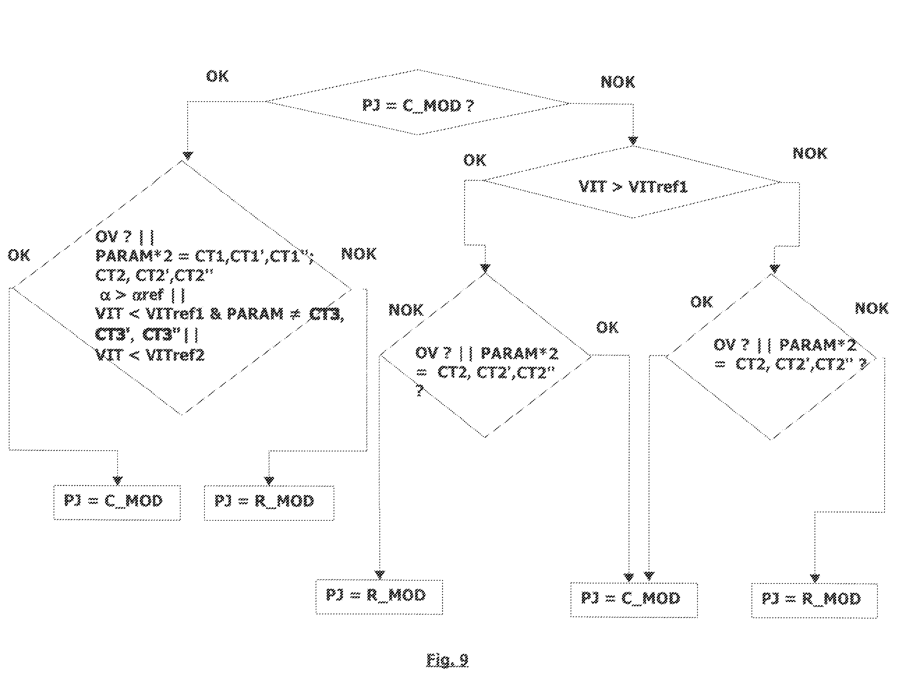

Ainsi, la détermination selon ce deuxième mode de réalisation s'effectue selon les étapes suivantes illustrées sur le diagramme de la Fig. 9.

Dans le cas où l'état des projecteurs PJ du véhicule V est initialement en position code C_MOD, i.e. que le véhicule se trouve dans un environnement éclairé :
- Si au moins un objet (i.e des lampadaires) a été validé, (cela veut dire que l'on est dans un environnement éclairé) ;
- Ou si au moins deux critères de vérité PARAM correspondent à un état probable de zone éclairée, ou un état sûr de zone éclairée ;
- Ou si l'angle au volant α est supérieur à un angle de référence αref ;
- Ou si sa vitesse VIT est inférieure à une première vitesse de référence VITref1 et aucun des critères de vérité PARAM ne correspond à un état sûr de zone non éclairée ;
- Ou si sa vitesse VIT est inférieure à une deuxième vitesse de référence VITref2 ;
   - Alors l'état des projecteurs PJ est figé : on demeure en position code C_MOD ;
   - Sinon, l'état des projecteurs PJ est modifié : on ajuste le mode d'éclairage des projecteurs PJ en position route R_MOD.

On notera que l'on choisit au moins deux critères de vérité PARAM, ce qui correspond à choisir la majorité, pour avoir plus de fiabilité.

Les mêmes explications données dans le premier mode de réalisation pour l'angle au volant α, la première vitesse de référence VITref1 et la deuxième vitesse de référence VITref2 s'appliquent pour ce deuxième mode de réalisation.

On notera cependant que si la vitesse VIT du véhicule reste inférieure à la première vitesse de référence VITref1, on demeure en position code C_MOD, sauf si aucun des critères de vérité PARAM ne montre que l'on se trouve de façon sûre dans un environnement non éclairé (donc qu'il n'y a aucune zone éclairée dans une image de cet environnement). On part de l'hypothèse qu'il est peu probable que l'on sorte d'une zone éclairée sous cette première vitesse de référence VITref1, mais que cela peut arriver et l'on veut être sûr que l'image de l'environnement dans lequel circule le véhicule est très sombre.

Dans le cas où l'état des projecteurs PJ du véhicule V est initialement en position route R_MOD, i.e. que le véhicule se trouve dans un environnement non éclairé :
- Si sa vitesse VIT est supérieure à la première vitesse de référence VITref1 ;
- Si au moins un objet (i.e des lampadaires) a été validé, (cela veut dire que l'on est dans un environnement éclairé) ;
- Ou si au moins deux critères de vérité PARAM correspondent à un état sûr de zone éclairée ;
   - Alors l'état des projecteurs PJ est modifié : on ajuste le mode d'éclairage des projecteurs PJ en position code C_MOD.

Par contre,
- Si sa vitesse VIT est inférieure à la première vitesse de référence VITref1 ;
   - Si au moins un objet (i.e des lampadaires) a été validé, (cela veut dire que l'on est dans un environnement éclairé) ;
   - Ou si au moins deux critères de vérité PARAM correspondent à un état sûr de zone éclairée ;
      - Alors l'état des projecteurs PJ est modifié : on ajuste le mode d'éclairage des projecteurs PJ en position code C_MOD ;
      - Sinon, l'état des projecteurs PJ est figé : on demeure en position route R_MOD.

On notera que l'on choisit au moins deux critères de vérité PARAM, ce qui correspond à choisir la majorité, pour avoir plus de fiabilité.

On notera qu'en ce qui concerne le test sur la vitesse VIT lorsqu'elle est supérieure à la première vitesse de référence VITref1, il y a une condition de plus (au niveau des deux critères PARAM) que les test sur la vitesse VIT lorsqu'elle est inférieure à la première vitesse de référence VITref1 car on considère que dans un environnement éclairé, tel qu'une ville par exemple, le véhicule doit rouler à basse vitesse. Ainsi, plus la vitesse VIT du véhicule est élevée, plus les conditions pour passer en position code C_MOD sont restrictives.

Ainsi, ce deuxième mode de réalisation permet d'une part d'avoir une détection stable et indépendante de la caméra utilisée, grâce à la détection de lampadaires, et d'autre part d'avoir une détection plus fiable dans le cas où la détection de lampadaires serait défectueuse (lampadaire abîmé, trop haut etc.) grâce à la détection de zones éclairées de nuit.

Dans un mode de réalisation non limitatif, la condition concernant le nombre d'objets validés est paramétrable. On peut décider de modifier l'état des projecteurs si un seul objet a été validé, ou au moins deux objets ont été validés etc.

### Troisième mode de réalisation

Dans un troisième mode de réalisation, on peut également déterminer le mode d'éclairage des projecteurs PJ du véhicule automobile en fonction uniquement :
- du degré d'éclairement Dg déterminé selon l'étape 8) vue précédemment ; et
- de paramètres propres PV au véhicule V.

Cela veut dire que l'on détermine le mode d'éclairage des projecteurs en fonction uniquement de la détection des zones éclairées de nuit par les objets éclairants.

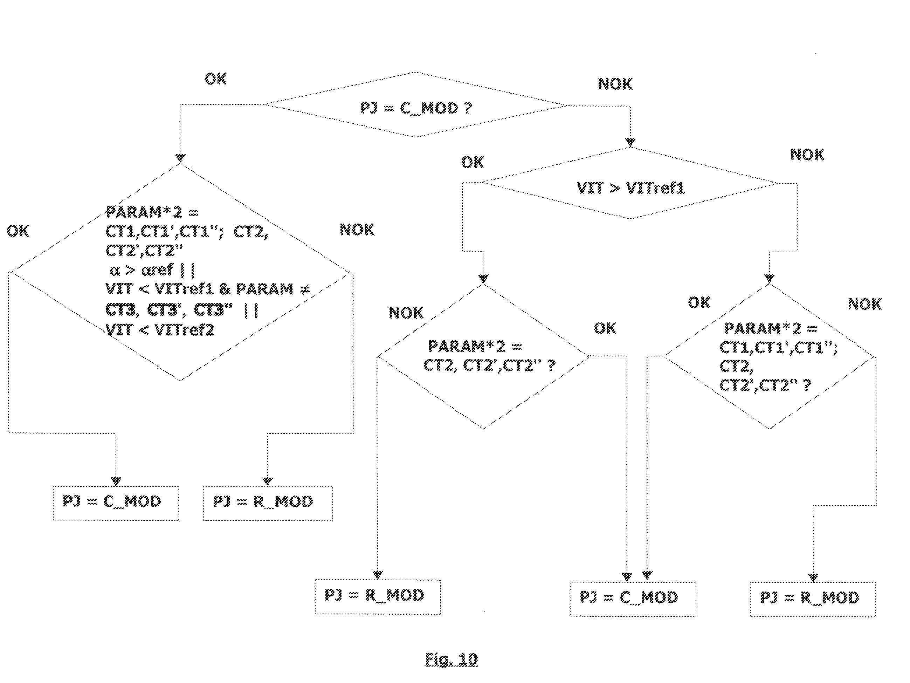

Ainsi, la détermination selon ce troisième mode de réalisation s'effectue selon les étapes suivantes illustrées sur le diagramme de la Fig. 10.

Dans le cas où l'état des projecteurs PJ du véhicule V est initialement en position code C_MOD, i.e. que le véhicule se trouve dans un environnement éclairé :
- Si au moins deux critères de vérité PARAM correspondent à un état probable de zone éclairée ou à un état sûr de zone éclairée ;
- Ou si l'angle au volant α est supérieur à un angle de référence αref ;
- Ou si sa vitesse VIT est inférieure à une première vitesse de référence VITref1 et aucun de critère de vérité PARAM correspond à un état sûr de zone non éclairée ;
- OU si sa vitesse VIT est inférieure à une deuxième vitesse de référence VITref2 ;
   - Alors l'état des projecteurs PJ est figé : on demeure en position code C_MOD ;
   - Sinon, l'état des projecteurs PJ est modifié : on ajuste le mode d'éclairage des projecteurs PJ en position route R_MOD.

On notera que l'on choisit au moins deux critères de vérité PARAM, ce qui correspond à choisir la majorité, pour avoir plus de fiabilité.

Les mêmes explications données dans les premier et deuxième modes de réalisation pour l'angle au volant α, la première vitesse de référence VITref1 et la deuxième vitesse de référence VITref2 s'appliquent pour ce troisième mode de réalisation.

On notera cependant que si la vitesse VIT du véhicule reste inférieure à la première vitesse de référence VITref1, on demeure en position code C_MOD, sauf si aucun des critères de vérité PARAM ne montre que l'on se trouve de façon sûre dans un environnement non éclairé (donc qu'il n'y a aucune zone éclairée dans une image de cet environnement). On part de l'hypothèse qu'il est peu probable que l'on sorte d'une zone éclairée sous cette première vitesse de référence VITref1, mais que cela peut arriver et l'on veut être sûr que l'image de l'environnement dans lequel circule le véhicule est très sombre.

Dans le cas où l'état des projecteurs PJ du véhicule V est initialement en position route R_MOD, i.e. que le véhicule se trouve dans un environnement non éclairé :
- Si sa vitesse VIT est supérieure à la première vitesse de référence VITref1 ;
- Si au moins deux critères de vérité PARAM correspondent à un état sûr de zone éclairée ;
   - Alors l'état des projecteurs PJ est modifié : on ajuste le mode d'éclairage des projecteurs PJ en position code C_MOD.
- Si sa vitesse VIT est inférieure à la première vitesse de référence VITref1 ;
- Si au moins deux critères de vérité PARAM correspondent à un un état probable de zone éclairée ou à un état sûr de zone éclairée ;
   - Alors l'état des projecteurs PJ est modifié : on ajuste le mode d'éclairage des projecteurs PJ en position code C_MOD.
   - Sinon, l'état des projecteurs PJ est figé : on demeure en position route R_MOD.

On notera qu'en ce qui concerne le test sur la vitesse VIT lorsqu'elle est supérieure à la première vitesse de référence VITref1, il y a une condition de plus (sur les deux critères PARAM) que les tests sur la vitesse VIT lorsqu'elle est inférieure à la première vitesse de référence VITref1 car on considère que dans un environnement éclairé, tel qu'une ville par exemple, le véhicule doit rouler à basse vitesse. Ainsi, plus la vitesse VIT du véhicule est élevée, plus les conditions pour passer en position code C_MOD sont restrictives.

On notera que la détection de zones éclairées de nuit dépend des caractéristiques de la caméra (résolution, dynamique, temps d'intégration) et donc selon la caméra utilisée, il peut y avoir peu de différence entre des zones éclairées ou non dans l'image, l'image peut donc être très sombre et ne pas comporter beaucoup de détails ce qui peut rendre difficile la détection de zones éclairées de nuit (selon les trois paramètres amplitude de la luminosité, niveau de détail, répartition de la luminosité, vu précédemment), d'où l'intérêt d'avoir la combinaison détection de lampadaires avec la détection de zones éclairées de nuit vu précédemment dans le deuxième mode de réalisation.

On notera enfin que pour les trois modes de réalisation d'ajustement de l'éclairage des projecteurs décrits ci-dessus, on peut également envisager, dans une autre variante de réalisation non limitative, de ne pas inclure les tests sur les paramètres propres au véhicule.

Ainsi, le procédé décrit permet de déterminer si le véhicule circule dans un environnement éclairé ou non et d'ajuster en conséquence le mode d'éclairage de ses projecteurs.

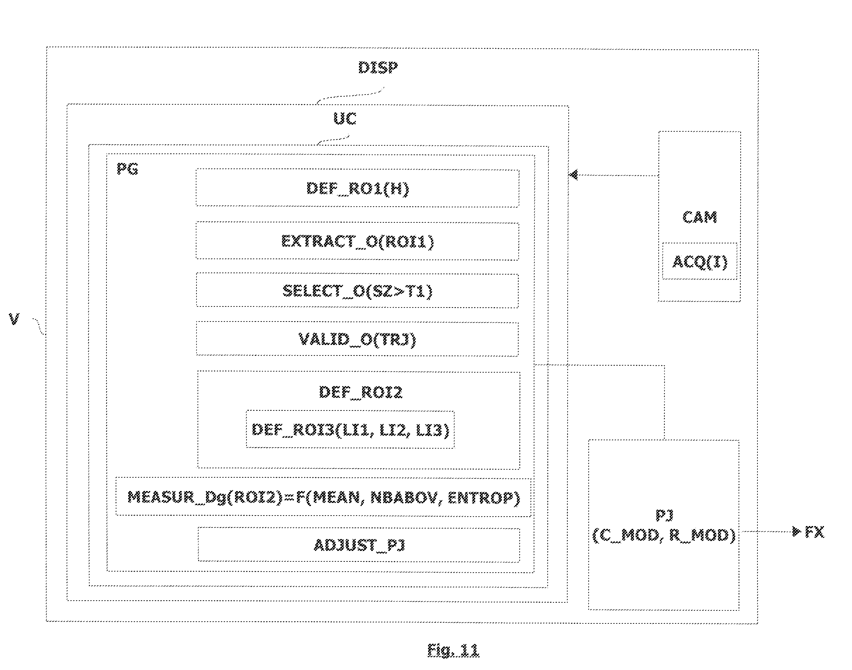

Le procédé de l'invention est mis en oeuvre par un dispositif de DISP d'ajustement de l'éclairage de projecteurs pour véhicule automobile, représenté à la Fig. 11.

Ce dispositif DISP est intégré dans le véhicule V.

Ce dispositif DISP comporte notamment :
- Une unité de contrôle UC :
   - pour détecter des objets éclairants en :
      - Déterminant une première région d'intérêt ROI1 dans une image acquise I par une caméra vidéo CAM du véhicule V;
      - Effectuant une extraction des objets O dans ladite première région d'intérêt ROI1, un objet extrait OE correspondant à une pluralité de pixels PX successifs ayant une valeur supérieure à un premier niveau de gris G1 ;
      - Sélectionnant les objets extraits OE qui ont une taille supérieure à une taille déterminée T1 ;
- et pour déterminer un mode d'éclairage des projecteurs PJ du véhicule automobile en fonction :
   - des objets sélectionnés OS, lesdits objets sélectionnés OS correspondant à des objets éclairants OC ; et
   - de paramètres propres PV au véhicule.

Dans un mode de réalisation non limitatif, l'unité de contrôle UC permet en outre de déterminer des zones éclairées par les objets éclairants en :
- Déterminant une deuxième région d'intérêt ROI2 dans une image acquise I par une caméra vidéo CAM du véhicule V ; et
- Mesurant un degré d'éclairement Dg dans la deuxième région d'intérêt déterminée ROI2.

Dans un exemple non limitatif, le véhicule comporte une caméra CAM qui acquière 10 images par seconde et est par exemple du type VGA de définition 640*480 et comporte une lentille (non représentée) à cet effet. Dans un mode de réalisation non limitatif, la résolution de la caméra est de 10 bits ou 12 bits, soit respectivement de 1024 ou 4096 niveaux de gris possibles pour une valeur de pixel PX.

On notera que l'on peut également utiliser une caméra 8 bits, mais elle aura moins de dynamique.

Dans un mode de réalisation non limitatif, le dispositif d'ajustement DISP peut en outre comporter la caméra vidéo CAM permettant d'acquérir une image I. On notera que dans ce cas, l'unité de traitement d'images TR peut également se trouver dans la caméra CAM ou faire partie de l'unité de contrôle UC également tel qu'illustré sur la Fig. 11.

On notera que la mise en oeuvre du procédé d'ajustement exposé ci-dessus peut être effectuée au moyen d'un dispositif micro programmé « software », d'une logique câblée et/ou de composants électroniques « hardware ».

Ainsi, le dispositif d'ajustement DISP peut comporter un produit programme d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé décrit.

Un tel programme d'ordinateur PG peut être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 11, le programme d'ordinateur PG est inscrit dans une mémoire de l'unité de contrôle UC du dispositif DISP.

Bien entendu, la description du procédé n'est pas limitée aux modes de réalisation et exemples décrits ci-dessus.

Ainsi, dans un mode de réalisation non limitatif, lors de la détection de lampadaires, on peut utiliser un compteur CPT qui compte le nombre de lampadaires extraits afin d'ajouter un test lors de la permutation du mode d'éclairage des projecteurs du mode route au mode code. Ainsi, dans un exemple non limitatif, au bout d'un lampadaire rencontré (extrait, sélectionné et validé), on peut décider d'allumer les projecteurs en position code, ou au bout de deux uniquement. Ce dernier test avec deux lampadaires permet d'éviter de se positionner en mode code lorsque l'on rencontre par exemple une maison isolée avec un lampadaire unique sur une route de campagne.

Par ailleurs, dans un mode de réalisation non limitatif, on peut très bien commencer par une détection de zones éclairées de nuit avant la détection de lampadaires.

Ainsi, l'invention présente notamment les avantages suivants :
- Elle évite d'avoir une solution uniquement basée sur la vitesse du véhicule, cette dernière solution ne prenant pas en compte la réalité de l'environnement du véhicule ;
- Elle permet de détecter à la fois l'éclairage public de nuit de la route sur laquelle circule le véhicule, et les zones éclairées par cet éclairage public au moyen respectivement de l'extraction d'objets, et de la mesure du degré d'éclairement ;
- Elle permet d'avoir une détection fiable et stable grâce à la détection de lampadaires et ce quelques soient les caractéristiques de la caméra utilisée. En effet, les sources lumineuses des lampadaires sont assez puissantes pour être toujours visibles dans une image acquise par la caméra ;
- Elle permet de fiabiliser la détection de l'éclairage de nuit tel que des lampadaires grâce à la validation de la trajectoire des objets sélectionnés dans une image et pouvant être représentatif de lampadaires ;
- Elle permet grâce à la détection de zones éclairées de nuit de reconnaître plus sûrement si le véhicule se trouve dans un environnement éclairé ou non; et en particulier dans les cas suivants :
   - lorsque les lampadaires sont placés trop haut et sont donc peut-être hors du champ de la caméra ;
   - lorsque la route est étroite, les lampadaires peuvent être également hors du champ de la caméra ;
   - lorsqu'un ou plusieurs lampadaires ne fonctionnent pas ;
   - lorsque la source lumineuse des lampadaires est cachée par des obstacles tels que des arbres (la détection des lampadaires selon les étapes de détection décrites ci-dessus est plus difficile) ;
- Elle permet d'éviter de prendre en compte la zone éclairée par le faisceau lumineux des projecteurs du véhicule, dans la détection des zones éclairées de nuit grâce à la suppression de la troisième région d'intérêt ;
- Elle permet de filtrer les fluctuations de la valeur moyenne des pixels, de l'entropie et du nombre de pixels au dessus d'un niveau de référence, grâce au calcul desdites caractéristiques qui s'effectue sur une séquence d'image ;
- Elle permet un ajustement du mode d'éclairage des projecteurs de façon plus rapide, grâce aux deux seuils supplémentaires S2, S3 ; S2', S3' ; S2", S3" utilisés pour chacun des paramètres de la mesure du degré d'éclairement ;
- Elle permet d'éviter des transitions intempestives entre le mode position route R_MOD et le mode position code C_MOD des projecteurs grâce à la temporisation mise en place au moyen des trois seuil S1, S2 et S3 associés à chacun des paramètres de la mesure du degré d'éclairement ; on a ainsi une meilleure stabilité dans la gestion de l'ajustement du mode d'éclairage des projecteurs du véhicule ; et
- Elle permet une meilleure réactivité pour l'ajustement du mode d'éclairage des projecteurs du véhicule lorsque le véhicule entre ou sort d'un environnement éclairé que dans le cas d'une solution qui n'utiliserait que la vitesse du véhicule ou d'une solution qui utiliserait des capteurs RLT (« Rain Light Tunel ») activant les projecteurs en position route. En effet, dans le cas de la première solution, la réactivité n'est pas bonne si l'on roule vite dans un environnement éclairé par exemple ou si l'on roule lentement dans un environnement non éclairé. Il peut y avoir des erreurs. Dans le cas de la deuxième solution, il est connu de l'homme du métier que les capteurs RLT ont un temps de latence important pour activer les projecteurs en position route par exemple.

## Revendications

1. Procédé d'ajustement de l'éclairage de projecteurs pour véhicule automobile, **caractérisé en ce qu'**il comporte :
- une étape de détection d'objets éclairants comportant les sous-étapes de :
- Déterminer une première région d'intérêt (ROI1) dans une image acquise (I) par une caméra vidéo (CAM) du véhicule (V) ;
- Extraire des objets (O) dans ladite première région d'intérêt (ROI1), un objet extrait (OE) correspondant à une pluralité de pixels (PX) successifs ayant une valeur supérieure à un premier niveau de gris (G1) ;
- Sélectionner les objets extraits (OE) qui ont une taille (SZ) supérieure à une taille déterminée (T1) ;
- et une étape de détermination du mode d'éclairage des projecteurs (PJ) du véhicule automobile en fonction :
- des objets sélectionnés (OS), lesdits objets sélectionnés (OS) correspondant à des objets éclairants (OC) ; et
- de paramètres propres (PV) au véhicule.

2. Procédé d'ajustement selon la revendication 1, selon lequel la première région d'intérêt (ROI1) se situe au dessus de l'horizon (H) dans l'image acquise (I).

3. Procédé d'ajustement selon l'une des revendications précédentes, selon lequel il comporte en outre une étape supplémentaire de :
- Valider la sélection d'un objet (O) en fonction de sa trajectoire (TRJ) déterminée dans une séquence d'images (SQ).

4. Procédé d'ajustement selon la revendication précédente, selon lequel la validation d'un objet sélectionné (OS) s'effectue en outre en fonction du nombre de fois où il apparaît dans une séquence d'images (SQ).

5. Procédé d'ajustement selon l'une des revendications précédentes 3 ou 4, selon lequel une temporisation (TP) est déclenchée à la suite d'une validation.

6. Procédé d'ajustement selon l'une des revendications précédentes, selon lequel lorsque l'état des projecteurs (PJ) du véhicule (V) est initialement en position code :
- Si au moins un objet a été sélectionné ;
- Ou si le véhicule comporte un angle au volant (α) supérieur à un angle de référence (αref) ;
- Ou si la vitesse du véhicule (VIT) est inférieure à une première vitesse de référence (VITref1) et aucun des critères de vérité (PARAM) correspond à un état sûr de zone non éclairée ;
- OU si la vitesse du véhicule (VIT) est inférieure à une deuxième vitesse de référence (VITref2) ;
- Alors le mode d'éclairage des projecteurs (PJ) demeure en position code ;
- Sinon, le mode d'éclairage des projecteurs (PJ) est ajusté en position route.

7. Procédé d'ajustement selon l'une des revendications précédentes, selon lequel lorsque l'état des projecteurs (PJ) du véhicule (V) est initialement en position route :
- Si la vitesse du véhicule (VIT) est supérieure à une première vitesse de référence (VITref1) ;
- Si au moins un objet a été sélectionné ;
- Alors le mode d'éclairage des projecteurs (PJ) est ajusté en position code ;
- Si la vitesse du véhicule (VIT) est inférieure à la première vitesse de référence (VITref1) ;
- Si au moins un objet a été sélectionné ;
- Alors le mode d'éclairage des projecteurs (PJ) est ajusté en position code ;
- Sinon, le mode d'éclairage des projecteurs (PJ) demeure en position route.

8. Procédé d'ajustement selon l'une des revendications précédentes, selon lequel il comporte en outre une étape supplémentaire de déterminer des zones éclairées de nuit par les objets éclairants dans laquelle :
- On détermine une deuxième région d'intérêt (ROI2) dans une image acquise (I) par une caméra vidéo (CAM) du véhicule (V) ; et
- On mesure un degré d'éclairement (Dg) dans ladite deuxième région d'intérêt (ROI2).

9. Procédé d'ajustement selon la revendication précédente, selon lequel la détermination des zones éclairées comporte en outre une étape supplémentaire de supprimer de la deuxième région d'intérêt (ROI2) une troisième région d'intérêt (ROI3) représentative d'une zone éclairée par un faisceau lumineux (FX) des projecteurs (PJ) du véhicule (V).

10. Procédé d'ajustement selon l'une des revendications précédentes 8 ou 9, selon lequel la mesure du degré d'éclairement (Dg) s'effectue selon un critère d'amplitude de luminosité dans la deuxième région d'intérêt (ROI2), ladite amplitude se calculant en fonction de la valeur moyenne (MEAN) de la valeur des pixels (PX) de la deuxième région d'intérêt (ROI2).

11. Procédé d'ajustement selon l'une des revendications précédentes 8 à 10, selon lequel la mesure du degré d'éclairement (Dg) s'effectue selon un critère de niveau de détail des informations contenues dans la deuxième région d'intérêt (ROI2), ledit niveau de détail étant calculé en fonction de l'entropie (ENTROP) de la deuxième région d'intérêt (ROI2).

12. Procédé d'ajustement selon l'une des revendications précédentes 8 à 1 1 , selon lequel la mesure du degré d'éclairement (Dg) s'effectue selon un critère de répartition de luminosité dans la deuxième région d'intérêt (ROI2), ladite répartition se calculant en fonction d'un nombre de pixels (NBABOV) dans la deuxième région d'intérêt (ROI2) dont la valeur est supérieure à un niveau de référence (REF).

13. Procédé d'ajustement selon l'une des revendications précédentes 10 à 12, selon lequel à chaque critère est associé :
- un premier seuil (S1, S1', S1") qui permet de déterminer si le véhicule se trouve dans une zone éclairée ou non ;
- un deuxième seuil (S2, S2', S2") qui permet de déterminer si le véhicule se trouve de façon certaine dans une zone éclairée ; et
- un troisième seuil (S3, S3', S3") qui permet de déterminer si le véhicule se trouve de façon certaine dans une zone non éclairée.

14. Procédé d'ajustement selon la revendication précédente, selon lequel à chaque seuil (S1, S1', S1" ; S2, S2', S2" ; S3, S3', S3") est associé respectivement un compteur (CT1, CT1', CT1" ; CT2, CT2', CT2"; CT3, CT3', CT3") qui permet de déterminer un nombre de fois où ledit seuil associé est atteint sur une séquence d'images (SQ).

15. Procédé d'ajustement selon la revendication précédente, selon lequel à chaque compteur (CT1, CT1', CT1" ; CT2, CT2', CT2"; CT3, CT3', CT3") est associé respectivement un critère de vérité (PARAM1, PARAM1', PARAM1"; PARAM2, PARAM2', PARAM2" ; PARAM3, PARAM3', PARAM3") qui est marqué vrai lorsque le compteur associé atteint un nombre de temporisation donné (NB_CT).

16. Procédé d'ajustement selon l'une des revendications précédentes 8 à 15, selon lequel la détermination du mode d'éclairage des projecteurs s'effectue en outre selon :
- les objets validés ; et
- le degré d'éclairement (Dg).

17. Procédé d'ajustement selon l'une des revendications précédentes 8 à 16, selon lequel lorsque l'état des projecteurs (PJ) du véhicule (V) est initialement en position code :
- Si au moins un objet a été validé ;
- Ou si au moins deux critères de vérité (PARAM) correspondent à un état probable de zone éclairée ou à un état sûr de zone éclairée ;
- Ou si le véhicule comporte un angle au volant (α) supérieur à un angle de référence (αref) ;
- Ou si la vitesse du véhicule (VIT) est inférieure à une première vitesse de référence (VITref1) et aucun des critères de vérité (PARAM) ne correspond à un état sûr de zone non éclairée ;
- OU si la vitesse du véhicule (VIT) est inférieure à une deuxième vitesse de référence (VITref2) ;
- Alors le mode d'éclairage des projecteurs (PJ) demeure en position code ;
- Sinon, le mode d'éclairage des projecteurs (PJ) est ajusté en position route.

18. Procédé d'ajustement selon l'une des revendications précédentes 8 à 17, selon lequel lorsque l'état des projecteurs (PJ) du véhicule (V) est initialement en position route :
- Si la vitesse du véhicule (VIT) est supérieure à une première vitesse de référence (VITref1) ;
- Si au moins un objet a été validé ;
- Ou si au moins deux critères de vérité (PARAM) correspondent à un état sûr de zone éclairée ;
- Alors le mode d'éclairage des projecteurs (PJ) est ajusté en position code ;
- Si la vitesse du véhicule (VIT) est inférieure à la première vitesse de référence (VITref1) ;
- Si au moins un objet a été validé ;
- Ou si au moins deux critères de vérité (PARAM) correspondent à un état probable de zone éclairée ou à un état sûr de zone éclairée ;
- Alors le mode d'éclairage des projecteurs (PJ) est ajusté en position code ;
- Sinon, le mode d'éclairage des projecteurs (PJ) demeure en position route.

19. Procédé d'ajustement selon l'une des revendications précédentes, selon lequel des paramètres du véhicule sont :
- un angle au volant (α); et/ou
- une vitesse (VIT); et/ou
- un angle d'assiette.

20. Dispositif (DISP) d'ajustement de l'éclairage de projecteurs pour véhicule automobile, comportant :
- Une unité de contrôle (UC) :
- pour détecter des objets éclairants en :
- Déterminant une première région d'intérêt (ROI1) dans une image acquise (I) par une caméra vidéo (CAM) du véhicule (V) ;
- Effectuant une extraction des objets (O) dans ladite première région d'intérêt (ROI1), un objet extrait (OE) correspondant à une pluralité de pixels (PX) successifs ayant une valeur supérieure à un premier niveau de gris (G1) ;
- Sélectionnant les objets extraits (OE) qui ont une taille supérieure à une taille déterminée (T1) ;
- et pour déterminer un mode d'éclairage des projecteurs (PJ) du véhicule automobile en fonction :
- des objets sélectionnés (OS), lesdits objets sélectionnés (OS) correspondant à des objets éclairants (OC) ; et
- de paramètres propres (PV) au véhicule.
